# EUROPÄISCHE PATENTANMELDUNG

(11) **EP 2 559 899 A1**
(43) Veröffentlichungstag der Anmeldung: **20.02.2013**
(21) Anmeldenummer: 08006705.1
(22) Anmeldetag: 01.04.2008
(51) Int. Cl.: F03G 7/10

(54) **Pfannebecker Prinzip**

(71) Anmelder: Pfannebecker, Wolfgang, 63069 Offenbach/M. (DE)
(72) Erfinder: Pfannebecker, Wolfgang, 63069 Offenbach/M. (DE)

(57) **Zusammenfassung**

Das Gerät arbeitet einmal mit dem Druck der Atmosphäre die mit einem Druck von einem Kilogramm pro Quadratzentimeter auf unsere Erde lastet. Je nach Wetterlage kann der Luftdruck nach oben, oder nach unten variieren. Der Druck ist immer vorhanden, doch diese Atmosphäre ist empfindlich, je mehr CO 2 in unsere Atmosphäre gelangt, umso stärker erwärmt sich unsere Erde. Der Klimawandel ist Weltweit, aber man soll ihn nicht beschleunigen.

Unsere Industrie benötigt sehr viel Strom, und der Strom wird vorwiegend aus Steinkohle, oder Braunkohle die verbrannt wird , um Hochdruckwasserdampf zu erzeugen die Turbinen antreiben die wiederum die Stromgeneratoren zur Stromgewinnung in Bewegung setzen.

Ich bin für Strom aus Kernkraftwerken, denn das ist der sauberste Umwelt freundlichster Strom.

Ich will mit meinem Atmo - D - V - Gerät meinen Beitrag zur Reinheit der Luft beitragen

Die zweite Kraft ist das Vakuum.

Vakuum kann man nicht erfinden, sondern man muss es machen.

Man nehme ein Zylinder und einen Kolben der mit Kolbenringe abgedichtet wird. Der Durchmesser vom Zylinder und Kolben richtet sich nach dem Strombedarf nach dem auch der Stromergenerator ausgewählt wird.

Am Ende des Zylinders beginnt der Vakuumraum.

Der Kolben wird jetzt mittels einer Pleuelstange 250mm mit der Kurbelwelle verbunden. Der Hub sollte zum Beispiel bei einem Kolbendurchmesser vom 100mm nicht mehr als 40mm mit der Kurbelwelle seitlich ausschwingen. Das heißt, 80 mm Hub ist gleich 0,8 Liter Vakuum.

Die Kurbelwelle wird im Vakuumraum in das rechte vorhandene

Kugellager eingeführt und luftdicht verschlossen.

Linkseitig wird die Welle zum Schwungrad zur Kurbelwelle eingeführt und ebenfalls Kugel gelagert. Beide Kugellager sind außen am Vakuumraum, doch linkseitig muss noch eine Stopfbuchse angebracht werden, um die

Dichtheit zu gewährleisten.

Beide Teile Zylinder und Vakuumraum werden zusammen geschraubt und luftdicht verschlossen.

Das Atmo Gerät wird mit zwei Zylindern betrieben. Man nehme wie beschrieben einen Baugleichen Zylinder mit Vakuumraum, doch die Antriebswelle zum Schwungrad ist jetzt rechts. Zwischen den beiden Zylindern ist das Schwungrad 800 Durchmesser das mit einem

Elektronabenmotor 24 Volt Lithium - Ionen Batterie angetrieben wird und mit den Wellen links und rechts verbunden ist.

Die Vakuumpumpe, und das Stromaggregat ohne Antriebsmotor werden hintereinander gekoppelt und mittels einer Keilriemenscheibe verbunden.

Nach der kompletten Montage des Gerätes kann Strom erzeugt werden.

Die so genannte Alternative Stromgewinnung wird staatlich gefördert, doch ich will einen anderen Weg gehen, und zwar folgenden. Die Besitzer einer Voltaiganlage bekommen für ihren Strom den sie in das Netz einspeisen eine Vergütung von 10 %, doch das wird da es Steuergelder sind sehr teuer.

Ich werde die Staatliche Hilfe auch in Anspruch nehmen, doch nach einem anderen Konzept.

Das Werk das das Atmo - D - V Gerät herstellt sollte unabhängig sein, doch die großen Stromanbieter sollte man 48 % mit in das Boot holen.

Das Atmo - d - V Werk stellt das Gerät her, übernimmt die Montage beim Kunden, doch so, dass der überschüssige Strom in das Netz des Anbieters eingespeist wird, und der Hersteller übernimmt den Kundendienst.

Der für die Region zuständige Stromanbieter bezahlt die Herstellung des Atmo - D - V Gerätes, und vermietet es an den Kunden. Für den Strom den das Atmo - D - V Gerät in den Stromkreislauf einspeist bekommt der Kunde keine Vergütung.

Das sind meine Vorstellungen, doch das müssen die Juristen ausarbeiten. Ich werde mich sollte ich ein Patentschutz für das Atmo - D - V Gerät bekommen mit der Hessischen Landesregierung in Verbindung setzen, und ich bin überzeugt, dass ich Erfolg habe, denn tausende Arbeitsplätze werden mit dem schadstoffarmen Pfannebecker System geschaffen.

## Beschreibung

Sehr geehrte Damen und Herren. In den Unterlagen die ich von ihnen bekommen habe ist ein Formblatt in dem ich aufgefordert werde eine Erfindernennung anzugeben das äußerst schwierig für mich ist, da das Gerät für das ich ein Patent erlangen will ist nach dem Prinzip des Atmosphärischen Luftdruckes und einem Vakuum aufgebaut.

### Der Luftdruck

Der Luftdruck ist das gesamte Gewicht der Luftsäule vom Erdboden an bis zur Grenze der Atmosphäre. Auf Meereshöhe lasten auf 1 cm Quadrat Erdboten ca. 1 Kg Gewicht.
Der Luftdruck ist vorhanden und nicht patentierbar.

### Das Vakuum

Das Vakuum ist ein nichts und man kann es nicht erfinden, sondern man macht mittels einer Vakuumpumpe einen Luftleeren Raum.

### Arbeitsprinzip des Gerätes.

Das von mir erfundene Gerät arbeitet nach den beiden oben genannten Kriterien. Einmal durch das Gewicht der Luft.
Je größer die Fläche umso mehr Kilogramm Gewicht steht zum Antrieb eines Gerätes zu Verfügung.
Der Luftleere Raum wird durch Einsatz einer Vakuumpumpe gemacht, und durch das Zusammenspiel der beiden Kräfte Luftdruck und Vakuum entsteht eine Kraft mit der man zum Beispiel einen Stromgenerator antreiben und preiswert Strom erzeugen kann.

Das Gerät kann in allen Größen gebaut werden, doch das Prinzip bleibt immer dasselbe.

Es arbeitet immer nach dem Prinzip des Erfinders, und deshalb soll es nach meinem Namen genannt werden, und zwar das Pfannebecker Prinzip

Das Gerät soll unter dem Namen Atmo-D-V6 gefertigt und vertrieben werden Atmo steht für Atmosphäre. D steht für Druck und V für Vakuum

Die Zahl in diesem Fall 6 gibt die Leistung der Vakuumpumpe von 1,6 Kubikmeter in der Minute an, und ändert sich je nach Bedarf von 1 bis ......

Alle Schaltvorgänge werden elektrisch getätigt, und die Vakuumbehälter von Gerät 1 und 2 sind evakuiert.

Der Kolben von Gerät 2 auf Position oben im Zylinder. Kolben Gerät 1 unten. Das Druckausgleichventil von Gerät 2 ist geschlossen.

Das Gerät 2 verhält sich neutral, denn dem Luftdruck der auf dem Kolben lastet wird der Luftdruck im Gerät entgegengesetzt.

Der Kolben von Gerät Nr. 1 ist unten und der Kolben von Gerät Nr. 2 oben.

Das Druckausgleichventil von Gerät Nr. 2 wird geschlossen.

Das Druckausgleichventil von Gerät Nr.1 und das Vakuumventil vom Vakuumbehälter Nr. 5 wird geöffnet.

Der Kolben von Gerät 2 wird nach unten gezogen, und der Kolben von Gerät Nr. 1 geht nach oben.

Das Vakuumventil 5a wird geöffnet und der Vakuumbehälter wird evakuiert.

Der Kolben von Gerät Nr. 1 ist oben und der Kolben von Gerät Nr. 2 unten.

Das Druckausgleichventil von Gerät 1 wird geschlossen.

Das Druckausgleichventil von Gerät 2 und das Vakuumventil vom Vakuumbehälter 6 von Gerät Nr. 1 wird geöffnet.

Der Kolben von Gerät Nr.1 wird nach unten gezogen, und der Kolben von Gerät 2 geht nach oben.

Vakuumventil 6a wird geöffnet und der Vakuumbehälter wird evakuiert.

Der Kolben von Gerät Nr.2 ist oben, und der Kolben von Gerät Nr.1 unten.

Das Druckausgleichgerät von Gerät 2 wird geschlossen.

Das Druckausgleichventil von Gerät 1 und das Vakuumventil von Vakuumbehälter 3 von Gerät Nr. 1 wird geöffnet.

Der Kolben von Gerät 2 wird nach unten gezogen, und der Kolben von Gerät 1 geht nach oben.

Vakuumventil 3a wird geöffnet und der Vakuumbehälter wird evakuiert.

Der Kolben von Gerät Nr. 1 ist oben, und der Kolben von Gerät Nr. 2 unten.

Das Druckausgleichventil von Gerät 1 wird geschlossen.

Das Druckausgleichventil von Gerät 2 und das Vakuumventil von Vakuumbehälter 4 von Gerät Nr. 1 geöffnet

Der Kolben von Gerät 1 geht nach unten, und der Kolben von Gerät 2 geht nach oben. Vakuumventil 4a wird geöffnet und der Vakuumbehälter wird evakuiert.

Der Kolben von Gerät Nr. 2 ist oben und der Kolben von Gerät Nr. 1 unten.

Das Druckausgleichventil von Gerät 2 wird geschlossen.

Das Druckausgleichventil von Gerät 1 und das Vakuumventil von Vakuumbehälter 1 von Gerät 2 wird geöffnet.

Der Kolben von Gerät 2 geht nach unten und der Kolben von Gerät 1 nach oben. Vakuumventil 1a wird geöffnet und der Vakuumbehälter wird evakuiert.

Der Kolben von Gerät Nr.1 ist oben und der Kolben von Gerät Nr. 2 ist unten.

Das Druckausgleichventil von Gerät 1 wird geschlossen.

Das Druckausgleichventil von Gerät 2 und das Vakuumventil von Vakuumbehälter 2 von Gerät 1 wird geöffnet.

Vakuumventil 2a wird geöffnet und der Vakuumbehälter wird evakuiert.

### Geschwindigkeitssteuerung des Gerätes

Am Gehäuse befindet sich ein Manuell einstellbares Ventil mit dem man die Geschwindigkeit die man benötigt einstellen kann. Siehe Ventilnummer 13 auf der Stückliste.

Mit diesem Ventil kann durch zudrehen, oder aufdrehen die Strömungsgeschwindigkeit der Luft beim absaugen in den Vakuumbehälter reguliert werden, und so die benötigte Umdrehungsgeschwindigkeit eines Stromerzeugeraggregat eingestellt werden.

### Stückliste

Nr. 1. = Zylinder ( Rohr D = 200x250 Wanddicke 6mm
Nr. 2 = Kolben Aluscheibe 200x50 mm
Nr. 3 = Stück Kolbenringe
Nr. 4 = Halterung der Pleuelstange
Nr. 5 = Pleuelstange
Nr. 6 = Kurbel
Nr. 7 = Kugellagergehäuse links + rechts
Nr. 8 = Rechteckrohr 200x100x3mm
Nr. 9 = Blech 2,5mm D= 200mm
Nr. 10 = 2 Stück Druckausgleichventile
Nr. 11 = 30x30 Winkeleisen 1,5 Meter
Nr. 12 = Nahtlosgezogenes Rohr ½ Zoll
Nr. 13 = 2 Stück Ventile manuell regelbar
Nr. 14 = Kunststoff Keilriemenrad D=650 Breite=50mm( Zahnrad , oder Getriebe)
Nr. 15 = 6 Stück Vakuumbehälter D= 150x550 mm
Nr. 16 = 12 Stück Vakuumventile ½ Zoll
Nr. 17 = Verschlussplatte 260x160x3mm
Nr.18 = Angetriebenes Keilriemenrad vom Stromaggregat D=50x50
Nr.19 = 2 Stück Keilriemen
Nr.20 = 1x Vakuumpumpe V6
Nr.21 =Stromaggregat Marke ?

### Arbeitsprinzip des Atmo-D- V6 Gerätes.

Das Druckausgleichventil des Gerätes ist geschlossen und es besteht ein Druckausgleich, das heißt, dem Luftdruck von einem Kilogramm pro Quadratzentimeter das sind bei einem Kolbendurchmesser von 200 mm 314 Kilogramm die auf dem Kolben drücken wird durch den gleichen Gegendruck im Gehäuse aufgehoben, und das Gerät verhält sich neutral, doch wenn das Behälterventil von einem evakuiertem Behälter geöffnet wird, dann wird die Luft im Geräte inneren in den Behälter gesaugt. Jetzt ist der Gegendruck aufgehoben und der Kolben wird vom Luftdruck nach unten gedrückt.

### Siehe Arbeitsweise des Atmo-D-V6 Gerätes auf Blatt

### Antrieb

Das Antriebsrad von 650 mm Durchmesser und 50mm Breite treibt mittels eines Keilriemens das Keilriemenrad von 50mm Durchmesser des Stromaggregates an, und das Atmo-D-V6 Gerät erreicht bei Hundert Hübe 1300 Umdrehungen in der Minute.

### Leistung der eingesetzten Vakuumpumpe V6

Die Vakuumpumpe V6 leistet in der Minute 1600 Liter a 0,1Bar

Das Volumen des Gerätes beträgt ca. 8 Liter.
Jedes mal, wenn der Kolben nach unten gehen muss, öffnet sich das Vakuumventil von einem Vakuumbehälter und die Luft die sich im Gerät befindet wird in den evakuierten 8 Liter Behälter gezogen.

### Jedes Gerät verfügt über 3 Stück Vakuumbehälter a 8 Liter Inhalt

Vakuumbehälter Nr.1 zieht die Luft aus dem Gerät. Der Kolben geht nach unten.
Vakuumbehälter N. 2. ist evakuiert und steht in Warteposition.
   3.
Vakuumbehälter Nr.3. wird evakuiert.

Die einzelnen Arbeitsgänge werden von der E. Schaltung bestimmt.

Hundert Hübe a 8 Liter = 800 Liter in der Minute.

Mit 1300 Umdrehungen in der Minute kann man ein Bosch - Eisemann Notstromaggregat betreiben das für 800 Umdrehungen in der Minute ausgelegt ist und 3KW leistet.

Bei höherem Strombedarf kommt das nächst größere Gerät das Atmo -D- V8 Gerät zu Einsatz.

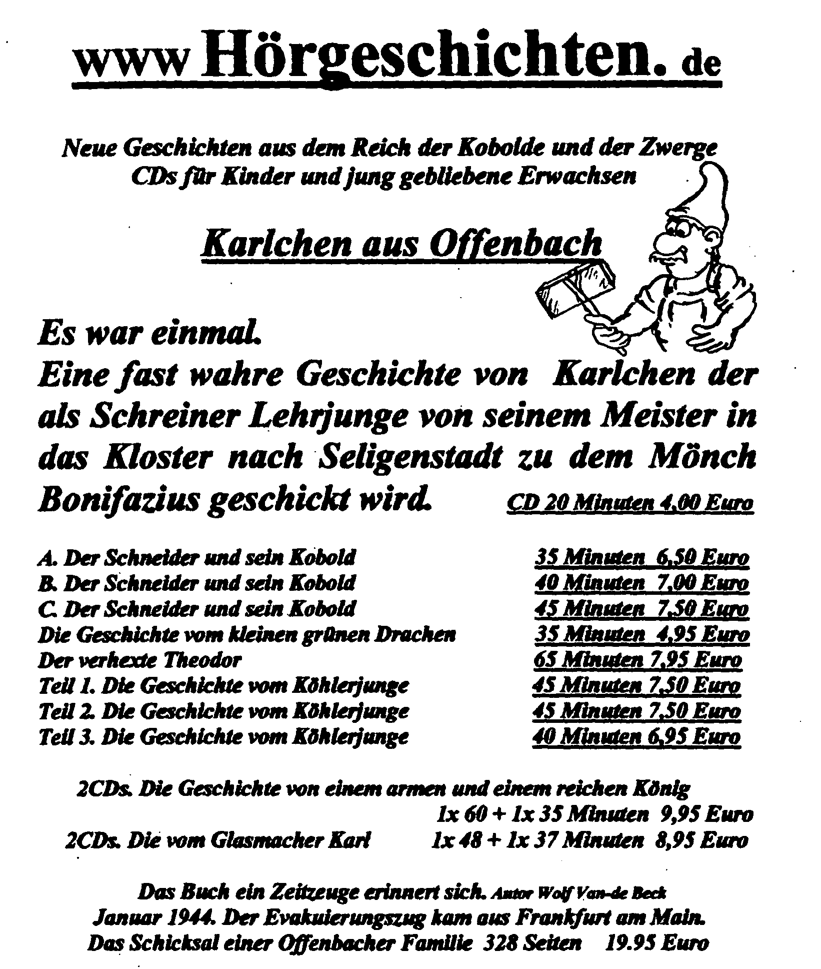

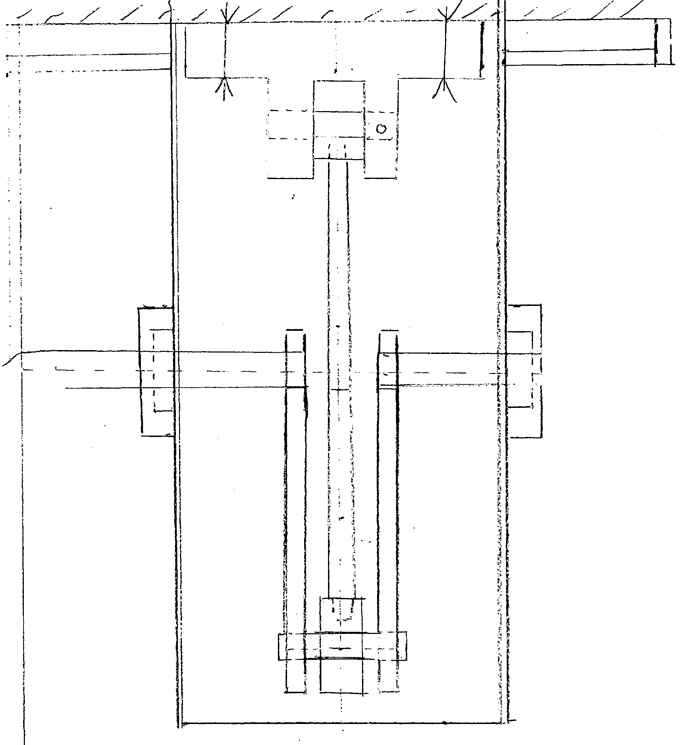

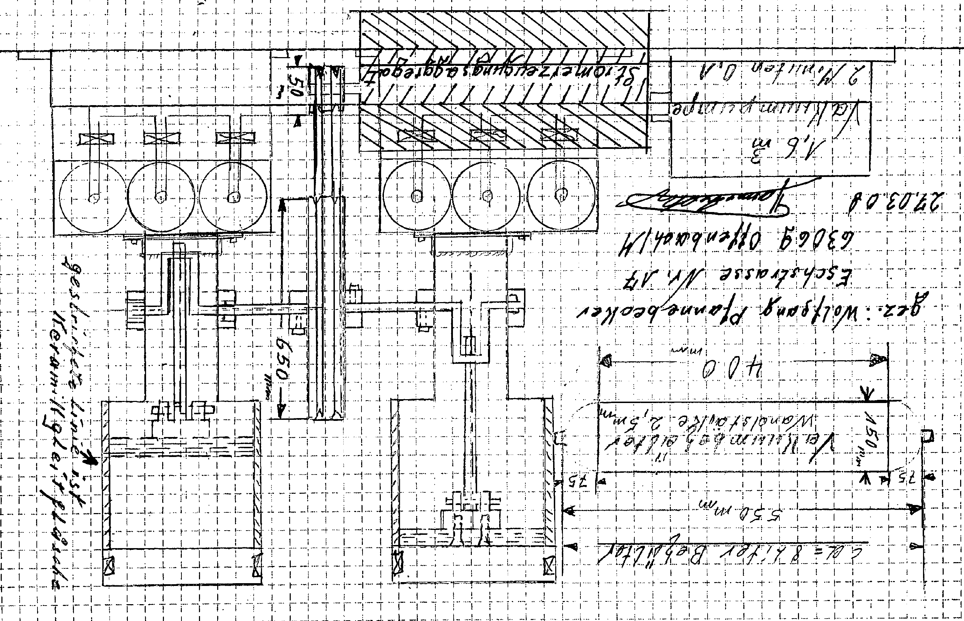

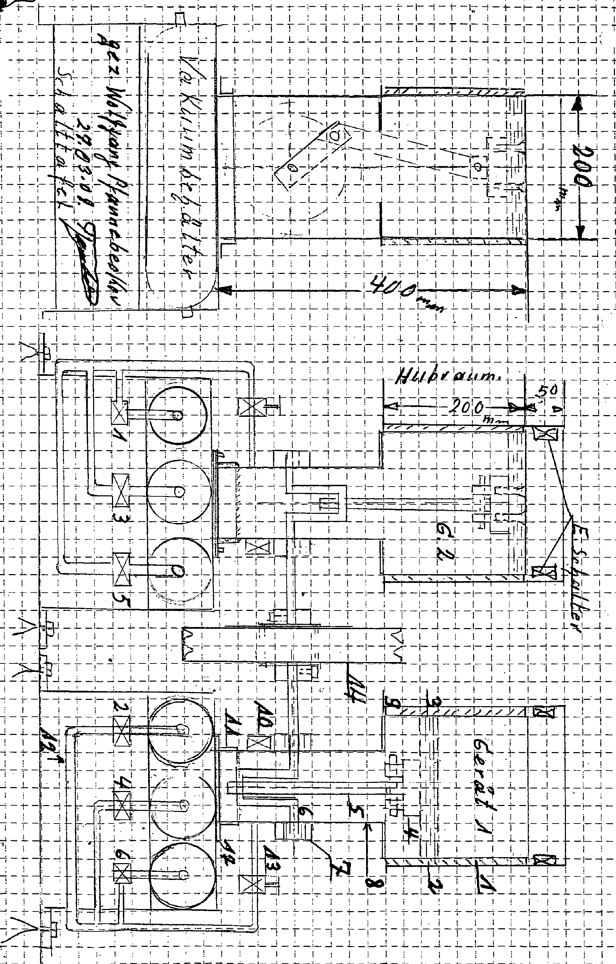

## Patentansprüche

1. Atmo D - V ? soll auch auf dem Typenschild des jeweiligen Gerätes stehen, wobei das Fragezeichen die Größe der jeweiligen Vakuumpumpe angibt. Mit der laufenden Herstellernummer Vakuumpumpennummer, und das Baujahr kann später nach der Auslieferung bestimmt werden was für ein Gerät zu wem ausgeliefert wurde.

2. Eine Serienfertigung sollte ein solventer Industriebetrieb übernehmen, um zu gewährleisten, dass die Garantie für ein Gerät gewährleistet ist. Eine Zertifizierung ist dafür unerlässlich.

3. Folgende Beweggründe hatten mich veranlasst meine Gedanken über eine Alternative Stromerzeugung aufzuzeichnen und bei dem Europäischen Patentamt in München einzureichen das es an Sie dem Europäisches Patentamt in den Niederlanden weitergereicht hat.

4. Der Grundgedanke ist preiswert Strom zu erzeugen, doch eine Stromerzeugung ohne die Umwelt mit großen Kohlekraftwerken zu schädigen. Westeuropa sind Länder ohne Rohstoffe, und jeder Liter Heizöl der verwendet wird um Gebäude zu heizen ist nicht zu verantworten.
Erdgas um die Heizungen zu betreiben ist ausreichend vorhanden, doch wir haben kein Erdgas, und wir sind auf Russland angewiesen. Wenn irgendein Anrainerstaat von Russland einen Anschlag auf die Gasleitungen verübt bleiben die Heizungen kalt.

5. Es ist mir bewusst, dass die Zeichnungen die ich eingereicht habe nicht gut sind, doch ich konnte um mein System geheim zuhalten kein Zeichenbüro beauftragen, und ich hatte richtig gehandelt, denn nachdem ich die Unterlagen an das Patentamt geschickt hatte, erst dann telefonierte ich mit einem Hersteller von Stromerzeuger. Das Gespräch war sehr aufschlussreich und dauerte eine halbe Stunde. Das Interesse an dem Gerät war sehr groß, und ein Preis für einen Prototyp von 70,00 Euro wurde auch genannt, doch als ich ihm gesagt hatte, dass ich die Papiere zum Patentamt geschickt habe war mein Gesprächspartner enttäuscht.
Da das Interesse von dem Hersteller von Stromerzeuger für mich sehr possitiev war telefonierte ich mit einem Hersteller von Vakuumpumpen, und mir wurde klar, dass mein System das richtige System ist um Strom zu erzeugen, ohne die Umwelt zu schädigen.
Mein Ansprechpartner Vertriebsingenieur Herr Riemenschneider den Namen der Firma darf ich nicht nennen, da ich die Erlaubnis des Vorstandes noch nicht habe, doch Herr Riemenschneider bestätigte mir, dass mein System das richtige ist. Auch ist Herr Riemenschneider der Meinung, dass die Vakuumpumpe bei 70% ihrer Leistung in der Lage ist den Kolben des Gerätes auf dem bei einem 200 mm Durchmesser 314 kg lastet nach unten zu gehen und das Gerät anzutreiben. Läuft das Gerät, dann verringert sich der Verbrauch von Vakuum nochmals um 5%.

6. Auch klärte mich Herr Riemenschneider auf, dass ein Trockenlauf Kolben Zylinder nach einem Jahr ausgetauscht werden muss. Ein einspritzen von Spezialöl schadet der Vakuumpumpe nach Einbau eines Filters nicht.

7. Der Motor der Vakuumpumpe wird abmontiert, und durch einen Batterie betriebenen Elektromotor 1200 Watt ersetzt. Stromerzeuger und Vakuumpumpe werden hintereinander gekoppelt. Da sie bei ihrer Leistung die sie erbringen müssen auch die gleiche Umdrehung haben.
Vakuumpumpe und Stromerzeuger werden mit Keilriemen Nr. 1 Schwung und Antriebsrad 650 mm bis-----? Durchmesser angetrieben.
Der Keilriemen Nr. 2 treibt eine herkömmliche ( LKW Lichtmaschine 24 Volt ) Stromaggregat die zwei 12 Volt Batterien speist. Mit dem 12 Volt Strom der Batterien wird der Elektromotor der Vakuumpumpe an die der Stromerzeuger gekoppelt ist angefahren. Der E. Motor ist mit einem Drehzahlmesser ausgerüstet, und schaltet erst wieder ein, wenn die Umdrehung der Vakuumpumpe 10% unterschritten wird.
Ich habe heute mit dem Büro der neuen Ministerin Frau Lautenschläger Ministerin für Umwelt und Energie gesprochen und wurde an den Staatssekretär Mark Weinmeister verwiesen. Fest steht, dass alles was der Umwelt zugute kommt staatlich gefördert wird. Auch mein Atmo-D-V Gerät wie ich es eingereicht habe.
Änderungen die ich hier beschrieben habe für die werde ich dann ein weiteres Patent anmelden.
Der Vakuumpumpenhersteller wird das Gerät in Lizenz herstellen, und wir leisten einen Beitrag zur CO2 Reduzierung und für die Umwelt.
